# EUROPEAN PATENT APPLICATION

(11) **EP 3 239 807 A1**
(43) Date of publication of application: **01.11.2017**
(21) Application number: 17164419.8
(22) Date of filing: 31.03.2017
(51) Int. Cl.: G06F 1/18, G06F 21/85

(54) **TAMPER-RESISTANT COVER**

(30) Priority: 29.04.2016 US 201615142088
(71) Applicant: Honeywell International Inc., Morris Plains, NJ 07950 (US)
(72) Inventor: PANE, Joseph, Morris Plains, NJ New Jersey 07950 (US); STRIANO, Mark, Morris Plains, NJ New Jersey 07950 (US)
(74) Representative: Houghton, Mark Phillip

(57) **Abstract**

A tamper-resistant cover apparatus (10) includes a cover (16) securable to the front face of a peripheral device (8). Such a cover permits status indicators (18, 20) and power buttons on the front face of the peripheral device to be visible through the cover and wherein the cover is attached to the face of the peripheral device by one or more connecting components (12, 13) to prevent unintended or malicious changes to the peripheral device. One or more portions of the cover can define an open area (14) through which one or more electronic cables connect to one or more ports (24) of the peripheral device. The open area supports the presence of electronic cables while preventing the electronic cable(s) from being removed as well as preventing unused ports associated from being accessed while the cover is in place.

## Description

### TECHNICAL FIELD

Embodiments are related to electronic and computer peripheral devices. Embodiments also relate to devices and techniques for securing peripherals and preventing unwanted access to such peripheral devices.

### BACKGROUND

Devices with peripheral interfaces on-board once commissioned for operating use are often left uncovered and unprotected. The consequences of such a vulnerability can include an unintentional change in the state of the peripheral, resulting in a fault in the device operation. Other consequences can involve a malicious change in the state of the peripheral, resulting in either a fault in the device operation or a compromise of a customer IP, or both.

Current solutions to this problem involve placing the device in a secured room or secured cabinet. Personnel, however, may need access to the room or cabinet to service other equipment, but not necessarily the device. Even if the personnel is authorized to service the device, leaving these peripherals uncovered / unprotected allows for casual or unintended changes (i.e., "cockpit errors")

### BRIEF SUMMARY

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.

It is, therefore, one aspect of the disclosed embodiments to provide for an apparatus for preventing unwanted access to a peripheral device.

It is another aspect of the disclosed embodiments to provide a tamper-resistance cover for a peripheral device.

It is also an aspect of the disclosed embodiments to provide a tamper-resistance cover for a peripheral device that is configured from a transparent or opaque material.

It is still another aspect of the disclosed embodiments to provide for a tamper-resistance cover for a peripheral device that is accessible with a removable tool such as a lock and key and which prevents a change of state of the covered peripheral without such a tool required to remove the cover.

The aforementioned aspects and other objectives and advantages can now be achieved as described herein. A tamper-resistant cover apparatus is disclosed, which includes a cover securable to a front face of a peripheral device, wherein the cover permits status indicators and power buttons on the front face of the peripheral device to be visible through the cover and wherein the cover is attached to the face of the peripheral device by one or more connecting components to prevent unintended or malicious changes to the peripheral device. One or more portions of the cover can define an open area through which one or more electronic cables connect to one or more ports of the peripheral device. Such an open area can support the presence of the electronic cable with respect to the peripheral device while preventing the electronic cable from being removed as well as preventing unused ports associated with the peripheral device from being accessed while the cover in place on the front face of the peripheral device.

In some example embodiments, the cover can be configured from a transparent material. In other embodiments, the cover can be configured from an opaque material. In some example embodiments, after the cover has been secured to the peripheral device, a tool may be required to remove the cover from the front face of the peripheral device. Such a tool can be a lock and key, wherein the key fits the lock, which is associated with the cover for removal of the cover from the front face of the peripheral device. Another example of restricting access to removal of the cover is utilizing a connecting component(s) that has a unique internal or external feature(s) that requires a tool with a common unique feature to remove the cover.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates a tamper-resistant cover apparatus, in accordance with an example embodiment; and
FIG. 2 illustrates a side perspective view of the tamper-reistance cover apparatus depicted in FIG. 1, in accordance with an example embodiment.

### DETAILED DESCRIPTION

The particular values and configurations discussed in these non-limiting examples can be varied and are cited merely to illustrate at least one embodiment and are not intended to limit the scope thereof.

The embodiments now will be described more fully hereinafter with reference to the accompanying drawings, in which illustrative embodiments of the invention are shown. The embodiments disclosed herein can be embodied in many different forms and should not be construed as limited to the embodiments set forth herein; rather, these embodiments are provided so that this disclosure will be thorough and complete, and will fully convey the scope of the embodiments to those skilled in the art. Like numbers refer to like elements throughout. As used herein, the term "and/or" includes any and all combinations of one or more of the associated listed items.

Subject matter may be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. The following detailed description is not, therefore, intended to be interpreted in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood, at least in part, from usage in context. For example, terms such as "and", "or", or "and/or," as used herein may include a variety of meanings that may depend at least in part upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a", "an", or "the", again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context. The term "at least one" can also refer "one or more".

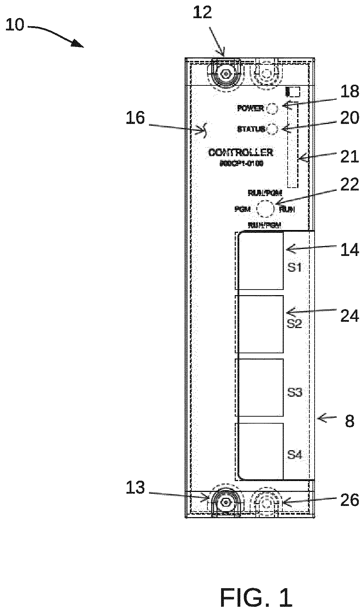

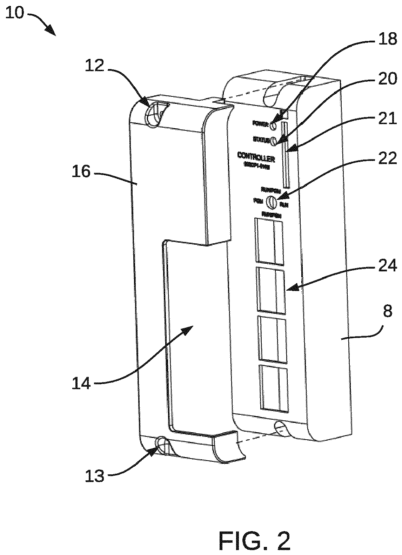

FIGS. 1-2 together illustrate a tamper-resistant cover apparatus 10, in accordance with an example embodiment. The tamper-resistant cover apparatus 10 includes a secured cover 16 that can be connected to a peripheral device 8 via one or more tamper resistant devices 12, 13 and optionally, a lock and key port 26 that is capable of receiving a key that unlocks the cover 16. In some example embodiments, the tamper resistance devices 12, 13 can be connected to primary or secondary features in the primary peripheral device. The secured cover 16 can be installed over a standard front bezel of the peripheral device 8. Note that in FIG. 1, the area surrounded by dashed lines generally represents the cover 16.

In some example embodiments, the cover 16 can be configured from a transparent material that allows for viewing of, for example, a power LED 18, a status LED 20 and other status indicators associated with the peripheral device 8. For example, peripheral device 8 may include a mode switch 22 that also includes a status LED to indicate a status of a particular mode associated with the peripheral device 8. If there is a need for visibility (i.e., to see such status indicators), it is preferred that the cover 16 is transparent.

In some cases, the peripheral device 8 may include an SD card slot 21 for receiving an SD card. A tool such as the aforementioned lock and key may be required to insert or remove such a card from slot 21. That is, the key may engage the lock and key port 26 to allow for the removal of the cover 16 from the front bezel of the peripheral device 8. Such a tool may also be needed to remove the cover to access the mode switch 22 and change the mode associated with the mode switch 22. It is important that access to, for example, the SD card slot 21 be limited because an SD card may be utilized to restore the device to its factory defaults and also the SC card can store and process program data, some of which may be proprietary. Similarly, access to the mode switch 22 should be limited because the mode switch can run or stop the operation of the device. When stopped, this takes the device out of its normal operational mode which can present a security and/or safety risk.

The cover 16 may be included with an open area 14 for the connection of Ethernet ports to support the presence of intended Ethernet cables and/or other types of cables such as serial cable connections, but which also prevents such cables from being removed as well as preventing unused ports from being connected while the cover 16 is in place. In the example shown in FIGS. 1-2, four example Ethernet ports 24 are shown partially covered by the cover 8, which prevents unwanted access to the ports 24 while the cover 16 is in place secured to the front bezel of the peripheral device 8. Access to ports 24 should be limited because connections to host systems are available here for read/write data operations from/to components associated with the peripheral device 8. When the mode switch 22 is in a STOP mode, for example, a connection here provides a path to change the device's program. Ports 24 also offer connections to remote I/O racks for accessing additional I/O data and connections. A connection of an unintended device or system can disrupt network bandwidth.

In some embodiments, only connector tabs under the cover 16 may be accessed so as to allow one or more cables to connected to one or more of the ports 24. In such a situation, the aforementioned tool (e.g., lock and key or other type of tool) may be utilized to remove the cover 8 and allow for a cable connection. The cover 8 can be then placed back onto the bezel and secured in place, which prevents removal of one or more such cables from one or more of the ports 24.

The tamper-resistant cover apparatus 10 thus includes the cover 16 which is securable to the front face of the peripheral device 8. The cover 16 permits status indicators and power buttons such as LED's 18, 20 and so on located on the front face of the peripheral device to be visible through the cover. The cover 16 can be attached to the face of the peripheral device by two or more connecting components such as screws 12, 13 to prevent unintended or malicious changes to the peripheral device 8. At least one portion of the cover can include an open area such as the open area 14 through which one or more cables can connect to one or more respective ports 24 of the peripheral device. The open area 14 supports the presence of the electronic cables with respect to peripheral device 8, but prevents the electronic cable(s) from being removed as well as preventing unused ports associated with the peripheral device from being accessed while the cover 16 is in place on the front face of the peripheral device. The cover 16 may be configured from a transparent material or an opaque material.

In some example embodiments, the cover 16 after being secured to the peripheral device 8 may require a tool to remove the cover from the front face of the peripheral device 8. Such a tool may be a lock and key, wherein the key fits the lock at the port 26, which is associated with the cover 16 for removal of the cover 16 from the front face or front bezel of the peripheral device 8. The cover 16 can thus protect removable storage media (e.g., SD cards), communication ports (e.g., Ethernet, serial, etc) and device mode switches (e.g., run/stop switch, etc) associated with the peripheral device 8.

Based on the foregoing, it can be appreciated that a number of embodiments, preferred and alternative, are disclosed herein. In one example embodiment, a tamper-resistant cover apparatus can include a cover securable to a peripheral device, wherein the cover permits status indicators and power buttons on the front face of the peripheral device to be visible through the cover and wherein the cover is attached to the peripheral device by at least one connecting component to prevent unintended or malicious changes to the peripheral device. Such a tamper-resistant cover apparatus can also include at least one portion of the cover comprising an open area through which at least one electronic cable connects to at least one port of the peripheral device, wherein the open area supports a presence of the at least one electronic cable with respect to the peripheral device but prevents the at least one electronic cable from being removed as well as preventing unused ports associated with the peripheral device from being accessed while the cover is in place on the peripheral device. In some example embodiments, the cover may be composed of a transparent material or an opaque material.

The cover, after being secured to the peripheral device, may require a tool to remove the cover from the peripheral device. In some example embodiments, such a tool can include a lock and key, wherein the key fits the lock, which is associated with the cover for removal of the cover from the peripheral device. The aforementioned connecting component can include a unique internal feature or a unique external feature that requires a tool with a unique common feature to remove the cover from the front peripheral device.

In another example embodiment, a method of configuring a tamper-resistant cover, can be implemented. Such a method can include steps or operations such providing a cover that is securable to a peripheral device, wherein the cover permits status indicators and power buttons on the front face of the peripheral device to be visible through the cover, wherein the cover includes an open area through which at least one electronic cable connects to at least one port of the peripheral device, wherein the open area supports a presence of the at least one electronic cable with respect to the peripheral device but prevents the at least one electronic cable from being removed as well as preventing unused ports associated with the peripheral device from being accessed while the cover is in place on the peripheral device; and attaching the cover to the peripheral device by at least one connecting component to prevent unintended or malicious changes to the peripheral device.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A tamper-resistant cover apparatus, comprising:
a cover securable to a peripheral device, wherein said cover permits status indicators and power buttons on said front face of said peripheral device to be visible through said cover and wherein said cover is attached to said peripheral device by at least one connecting component to prevent unintended or malicious changes to said peripheral device; and
at least one portion of said cover comprising an open area through which at least one electronic cable connects to at least one port of said peripheral device, wherein said open area supports a presence of said at least one electronic cable with respect to said peripheral device but prevents said at least one electronic cable from being removed as well as preventing unused ports associated with said peripheral device from being accessed while said cover is in place on said peripheral device.

2. The apparatus of claim 1 wherein said cover after being secured to said peripheral device requires a tool to remove said cover from said peripheral device.

3. The apparatus of claim 2 wherein said tool comprises a lock and key, wherein said key fits said lock, which is associated with said cover for removal of said cover from said peripheral device.

4. The apparatus of claim 1 wherein said peripheral device comprises removable storage media.

5. The apparatus of claim 1 wherein said at least one connecting component includes a unique internal feature or a unique external feature that requires a tool with a unique common feature to remove said cover from said front peripheral device.

6. The apparatus of claim 1 wherein said cover is securable to a front face of said peripheral device.

7. A tamper-resistant cover apparatus, comprising:
a cover securable to a peripheral device, wherein said cover permits status indicators and power buttons on said front face of said peripheral device to be visible through said cover and wherein said cover is attached to said peripheral device by at least one connecting component to prevent unintended or malicious changes to said peripheral device, wherein said at least one connecting component includes a unique internal feature or a unique external feature that requires a tool with a unique common feature to remove said cover from said front peripheral device; and
at least one portion of said cover comprising an open area through which at least one electronic cable connects to at least one port of said peripheral device, wherein said open area supports a presence of said at least one electronic cable with respect to said peripheral device but prevents said at least one electronic cable from being removed as well as preventing unused ports associated with said peripheral device from being accessed while said cover is in place on said peripheral device.

8. The apparatus of claim 7 wherein said cover comprises at least one of: a transparent material and an opaque material.

9. The apparatus of claim 7 wherein said cover after being secured to said peripheral device requires a tool to remove said cover from said peripheral device and wherein said tool comprises a lock and key, wherein said key fits said lock, which is associated with said cover for removal of said cover from said peripheral device.

10. A method of configuring a tamper-resistant cover, said method comprising:
providing a cover that is securable to a peripheral device, wherein said cover permits status indicators and power buttons on said front face of said peripheral device to be visible through said cover, wherein said cover includes an open area through which at least one electronic cable connects to at least one port of said peripheral device, wherein said open area supports a presence of said at least one electronic cable with respect to said peripheral device but prevents said at least one electronic cable from being removed as well as preventing unused ports associated with said peripheral device from being accessed while said cover is in place on said peripheral device; and
attaching said cover to said peripheral device by at least one connecting component to prevent unintended or malicious changes to said peripheral device.
